# FASCICULE DE BREVET EUROPEEN

(11) **EP 1 028 986 B1**
(45) Date de publication et mention de la délivrance du brevet: **02.04.2003**
(21) Numéro de dépôt: 99932947.7
(22) Date de dépôt: 22.07.1999
(51) Int. Cl.: C08F 220/56, C08F 220/34, C08F 220/60, C08F 226/02, A01N 33/12

(54) **COPOLYMERE D'ACRYLAMIDE ET DE SELS DE TRIALKYLAMMONIUM, PROCEDE D'OBTENTION ET TEXTILE ENDUIT**
COPOLYMER VON ACRYLAMID UND EIN TRIALKYLAMMONIUMSALZ, VERFAHREN ZU SEINER HERSTELLUNG UND BESCHICHTETES TEXTILPRODUKT
ACRYLAMIDE AND TRIALKYLAMMONIUM SALT COPOLYMER, METHOD FOR OBTAINING IT AND COATED TEXTILE

(30) Priorité: 23.07.1998 FR 9809584
(43) Date de publication de la demande: 23.08.2000
(73) Titulaire: Institut Textile et Chimique de Lyon ( ITECH), 69007 Lyon (FR)
(72) Inventeur: DESCHERES, Isabelle, F-69008 Lyon (FR); BOULON, Gilbert, F-69005 Lyon (FR)
(74) Mandataire: Ohresser, François
(86) Numéro de dépôt international: FR9901802
(87) Numéro de publication internationale: WO00005281

(56) Documents cités:
- FR-A- 2 695 800
- US-A- 4 058 491
- US-A- 4 429 096
- US-A- 5 614 602

## Description

La présente invention concerne un copolymère d'acrylamide ou dérivé d'acrylamide et de sels de trialkylammonium, qui présente un caractère biocide et est notamment destiné à l'enduction de supports.

Dans la description suivante, l'invention est plus particulièrement exposée en référence à un copolymère pour l'imprégnation d'un support textile, mais bien entendu, elle ne saurait s'y limiter, le copolymère de l'invention pouvant être appliqué à d'autres supports tels que des supports cuir, bois, matériaux plastiques.

Par biocide, on entend la propriété qui consiste à détruire un microorganisme tel que champignons, levures, bactéries. Plus précisément, le copolymère objet de l'invention présente et confère au support sur lequel il est appliqué, un caractère biocide de contact ce qui signifie qu'il entraîne directement la mort des microorganismes, par simple contact.

La présente invention trouve un intérêt principal dans le domaine médical où la nécessité de disposer de moyens de protection contre les agents pathogènes est sans cesse croissante.

Les propriétés requises pour un textile à usage médical sont d'abord un effet biocide et une bonne absorption des liquides.

On connaît selon le document FR-A-2 695 800, un composé biocide ou antiseptique, répondant à la formule suivante :

[H₂C = C(R₁) ―B - (CH₂-CH₂)ₙ ― N⁺ (R₂) (R₃) (R₄)] X⁻

dans laquelle,
R₁ représente H ou CH₃,
R₂, R₃ et R₄ représentent chacun un groupe alkyle tel que le nombre total d'atomes de carbone de R₂, R₃ et R₄ varie de 6 à 15,
n varie de 1 à 3,
B représente CH₂, une fonction carboxylique ou une fonction amide, et
X⁻ représente un contre-ion.

Le composé décrit est utilisé pour la préparation de textile de coton tissé biocide dans des conditions de greffage dudit composé, par activation radicalaire sous l'effet de rayonnement ionisant, tel que rayonnement γ.

La fabrication à l'échelle industrielle d'un textile biocide tel que décrit selon FR-A-2 695 800, et plus particulièrement l'étape de greffage du composé sur le support, représente un investissement technologique très lourd et exige de plus un personnel obligatoirement formé aux techniques nucléaires, compte tenu des effets nocifs de tels rayonnements.

La Demanderesse a découvert un produit biocide permettant de résoudre le problème posé par les composés biocides connus, en apportant un produit qui peut être fixé sur un support par simple imprégnation. En particulier, quand le support est textile, la fixation du produit peut être réalisée par des techniques usuelles de cette industrie, notamment le foulardage.

Le produit de l'invention consiste en un copolymère qui peut être obtenu par copolymérisation radicalaire en présence d'un amorceur
- d'au moins d'un premier monomère choisi parmi l'acrylamide et ses dérivés de formule

   H₂C = CH ― (CH₂)_{n"} ― CONH₂

   dans laquelle n" est un nombre entier pouvant varier de 1 à 5, et avantageusement de 1 à 3 ;
- et d'un second monomère choisi parmi les sels de trialkylammonium répondant à la formule (I) suivante

   [H₂C = C(R₁) - (CH₂)ₙ - A - (CH₂)_{n'} - N⁺ (R₂) (R₃) (R₄)] X⁻ (I)
dans laquelle,
R₁ représente H ou un groupe alkyle ayant de 1 à 3 atomes de carbone,
R₂, R₃ et R₄ identiques ou différents, représentent chacun un groupe alkyle ayant de 1 à 3 atomes de carbone,
n et n' représentent chacun, indépendamment l'un de l'autre, un entier non nul au plus égal à 15,
A représente une fonction bivalente carboxyle ou amide, et
X' représente un contre-ion.

De préférence, le premier monomère est l'acrylamide, ou bien le second monomère répond à la formule (I) ci-dessus décrite, dans laquelle n varie de 7 à 9, n' varie de 2 à 4 et X⁻ représente Cl⁻, F⁻ ou un ion alkylsulfate.

De manière avantageuse, le second monomère répond à la formule (I) ci-dessus décrite dans laquelle R₁ représente H ; R₂, R₃ et R₄ sont identiques et représentent chacun le groupe méthyle ; n est égal à 8 et n' est égal à 3 ; A représente la fonction amide ; et X⁻ représente l'ion méthylsulfate.

Comme l'illustreront les exemples en fin de description, un copolymère particulièrement avantageux selon l'invention est celui qui peut résulter de la copolymérisation entre le premier et le second monomère préférés, identifiés ci-dessus.

De manière encore plus avantageuse, le poids moléculaire moyen en poids (Mw) des copolymères est compris entre 6000 et 10000.

Selon une variante de l'invention, un copolymère peut consister en un terpolymère que l'on peut obtenir par copolymérisation radicataire au moins dudit premier monomère, dudit second monomère et en outre d'un troisième monomère choisi parmi l'acide acrylique et les esters vinyliques. A titre d'exemple de tels esters, on peut citer l'acétate de vinyle, le propionate de vinyle et le butyrate de vinyle.

Un autre objet de l'invention est un procédé d'obtention d'un copolymère défini précédemment. Il comprend les étapes consistant à mettre en réaction au moins un premier monomère, un second monomère et éventuellement un troisième monomère, tels qu'ils ont été définis ci-dessus, dans un solvant à la température du reflux, en présence d'un amorceur.

De préférence le premier monomère est l'acrylamide et/ou le second monomère répond à la formule (I) dans laquelle n varie de 7 à 9, n' varie de 2 à 4 et X⁻ représente Cl⁻, F⁻ ou un ion alkylsulfate.

De manière avantageuse, le deuxième monomère répond à la formule (I) dans laquelle R₁ représente H ; R₂, R₃ et R₄ sont identiques et représentent chacun le groupe méthyle ; n est égal à 8 et n' est égal à 3 ; A représente la fonction amide ; et X⁻ représente l'ion méthylsulfate. Le cas échéant le troisième monomère est l'acide acrylique.

Le procédé de l'invention présente au surplus les caractéristiques préférentielles suivantes, considérées seules ou en combinaison :
- la concentration molaire du second monomère est au moins égale à 20 %, par rapport à la concentration molaire finale des premier et second monomères, et du troisième monomère s'il y a lieu ; avantageusement, cette concentration est au moins égale à 25 % et au plus égale à 40 % ;
- le solvant dans lequel les monomères sont mis en réaction est un mélange eau/éthanol, en un rapport molaire variant de préférence de 25/75 à 50/50 ;
- l'amorceur est choisi parmi l'hydrochlorure de 2,2'-azobis(2-amidinopropané) et le persulfate de potassium ;
- la mise en réaction des premier, second et éventuellement troisième monomères est effectuée sous flux d'azote.

Un autre objet de l'invention est un textile enduit par un copolymère de l'invention. De préférence, ce textile est choisi parmi les tissus en coton et les non-tissés en polyester qui sont les textiles les plus fréquemment employés, notamment dans le domaine médical.

L'invention concerne aussi l'utilisation d'un copolymère défini précédemment, pour obtenir un textile biocide par contact.

Les caractéristiques et avantages des objets de l'invention sont mis en évidence dans les exemples 1 à 4 suivants.

### EXEMPLE 1 : Obtention d'un copolymère préféré selon l'invention

### 1/ Produits mis en jeu

### - Monomères :

### Premier monomère : acrylamide,

Second monomère : méthylsulfate de triméthylammonium undécyl-amide-propyle (NORAMIUM® MU 50 ; ELF ATOCHEM S.A.) de formule :

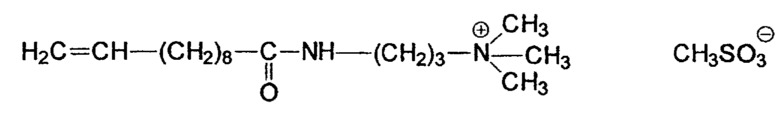

### Troisième monomère : acide acrylique

- *Amorceur :* hydrochlorure de 2,2'-azobis(2-amidinopropane) (V50® ; WAKO) ou persulfate de potassium
- *Solvant :* mélange eau/méthanol.

### 2/ Principe

La copolymérisation est effectuée en Pad-Batch, c'est-à-dire par introduction simultanée et en une seule fois des monomères dans le réacteur, sous un flux d'azote (afin d'éliminer l'oxygène dissous qui est un inhibiteur de polymérisation) et à 70°C (température de reflux du méthanol).

Les formulations sont préparées pour un volume de solution de 1 litre (synthèse à l'échelle du laboratoire) et 100 litres (synthèse à l'échelle industrielle).

### 3/ Matériel

La synthèse à l'échelle du laboratoire est effectuée dans un réacteur de deux litres comportant une double enveloppe reliée à un bain thermostaté, et équipé d'un réfrigérant terminé par un bulleur, d'un agitateur mécanique indiquant la vitesse de rotation, et d'une entrée pour l'introduction des différents produits.

Pour la synthèse à l'échelle industrielle, on utilise un réacteur de 300 litres muni d'un équipement similaire et d'une entrée d'azote.

### 4/ Synthèse du copolymère

### - Synthèse à l'échelle du laboratoire

Différents copolymères sont préparés : des copolymères à base d'acrylamide et de NORAMIUM® MU 50, et des terpolymères à base d'acrylamide, de NORAMIUM® MU 50 et d'acide acrylique, en faisant varier, pour chaque synthèse, les paramètres suivants : proportions des différents monomères (NORAMIUM® MU 50/acrylamide/acide acrylique, abrégé NOR/ACRY/Ac ACRY), concentration globale en monomère et concentration en méthanol.

La concentration en amorceur V50® est constante (1 g/l).

Les paramètres choisis pour les synthèses et les résultats sont rassemblés dans le tableau 1.

### - Synthèse à l'échelle industrielle

Les deux solutions copolymères préparées correspondent aux solutions copolymère 19 et 26 ci-dessus. Elles sont obtenues dans les conditions du Tableau 1, à l'exception du fait que l'amorceur employé est le persulfate de potassium. Les copolymères obtenus (19' et 26', respectivement) sont identiques.

### 5/ Caractérisation du copolymère

Le copolymère obtenu est caractérisé par son aspect final (solution homogène, solution hétérogène ou gel), par les masses moléculaires moyennes en nombre (Mn) et en masse (Mw) et par l'indice de polydispersité (Ip = Mw/Mn) déterminées par chromatographie par perméation de gel. Ces paramètres figurent dans le tableau 1.

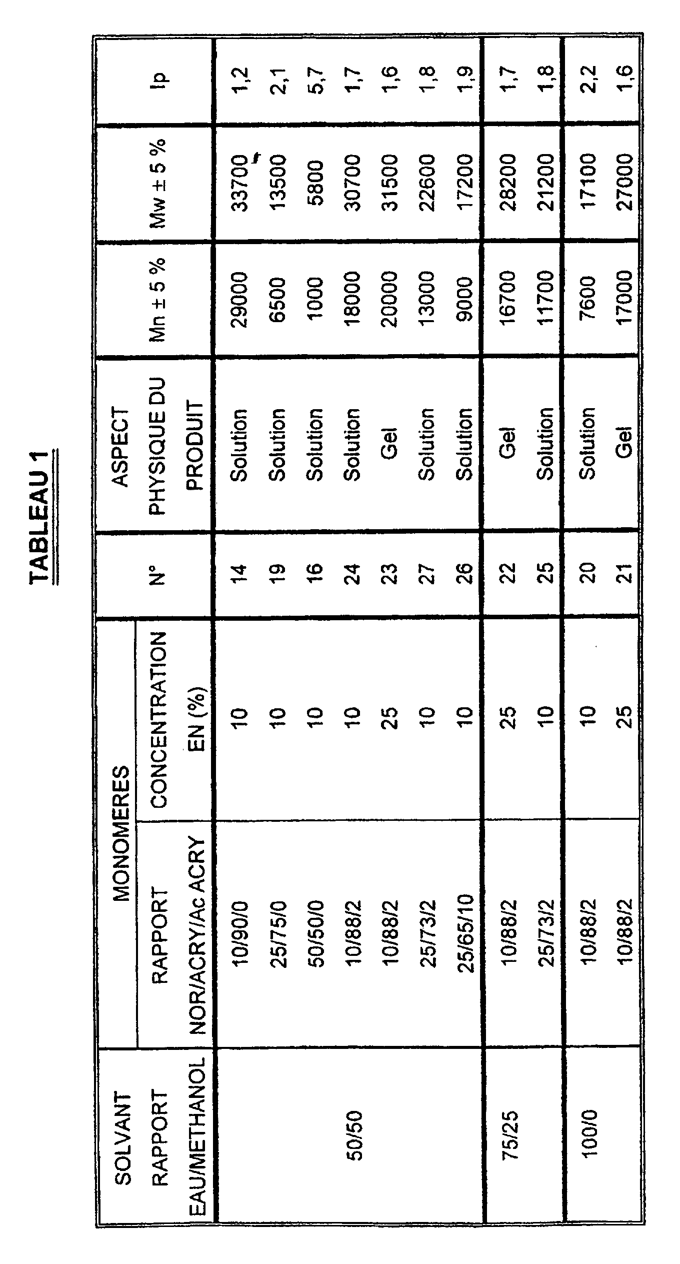

### EXEMPLE 2 : Pouvoir bactéricide des copolymères

### 1/ Principe

La solution de copolymère est mise en contact avec une population connue de *Pseudomonas aeruginosa* ATC 9027 ou *Staphylococcus aureus* ATCC 6538 qui s'est développé pendant environ 12 heures au sein d'une étuve à 30°C, dans un milieu nutritif initialement stérile.

Soient N_{O} (bactéries/cm³) la population bactérienne initiale, et Nₜ (bactéries/cm³) la population au temps t, on mesure le pouvoir bactéricide en calculant LOG (Nₜ/N_{O}).

On attribue aux valeurs de LOG (Nₜ/N_{O}) l'effet suivant :

| LOG (Nₜ/N_{O}) | Effet |
|---|---|
| Nul | bactériostatique |
| Négatif | bactéricide |
| Positif | aucun |

### 2/ Comptage des bactéries

On utilise la méthode par dilution dénommée *"Microbiological tests"* décrite dans *"United States Phramacopeia XIX".*

Le dénombrement des bactéries est effectué selon la méthode connue sous la dénomination *"Most Probable Total Count by Multiple-tube Method".*

### 3/ Résultats

Le pouvoir bactéricide des solutions copolymères 14, 16 et 19 calculé en fonction d'un temps de contact variant de 1 à 24 heures est donné dans le tableau 2.

La concentration en équivalent NORAMIUM® MU 50 (NOR) de chaque solution copolymère est exprimée en mol/l.

**TABLEAU 2**

| **SOLUTION COPOLYMERE N°** | **T (heures)** | **Pseudomonas aeruginosa** | | **Staphylococcus aureus** | |
|---|---|---|---|---|---|
| | | **Population N (bactéries/ml)** | **LOG N**_{**t**}**/N**_{**O**} | **Population N (bactéries/ml)** | **LOG N**_{**t**}**/N**_{**O**} |
| 14 (NOR=0,10) | 0 | 2,5x10⁷ | - | 4,5x10⁶ | - |
| | 1 | 9x10³ | - 3,44 | ND | ND |
| | 4 | 5x10³ | - 3,70 | 4,5x10² | - 4,00 |
| | 7 | 9x10² | - 4,44 | ND | ND |
| | 24 | 3x10² | -4,92 | 2,5x10² | -4,25 |
| 19 (NOR = 0,17) | 0 | 2,5x10⁷ | - | 4,5x10⁶ | - |
| | 1 | 5x10³ | - 3,70 | ND | ND |
| | 4 | 5x10² | -4,44 | 3x10² | -4,17 |
| | 7 | 3x10² | -4,92 | ND | ND |
| | 24 | 3x10² | -4,92 | 2,5x10² | - 4,25 |
| 16 (NOR = 0,20) | 0 | 2,5x10⁷ | - | 4,5x10⁶ | - |
| | 1 | 9x10² | - 4,44 | ND | ND |
| | 4 | 3x10² | -4,92 | 2,5x10² | -4,25 |
| | 7 | 3x10² | -4,92 | ND | ND |
| | 24 | 3x10² | -4,92 | 0,9x10² | - 4,69 |
| ND = non déterminé | | | | | |

On observe que l'activité biocide est très forte pour toutes les solutions de copolymères et ce, dès la première heure.

Lorsque la concentration en NORAMIUM® MU 50 dans la solution augmente, l'activité biocide du polymère augmente.

### EXEMPLE 3 : Obtention d'un textile à caractère biocide

### 1/ Textile

On a utilisé un textile en coton et un non-tissé en polyester à 70 g/m².

### 2/ Imprégnation

Les essais sont réalisés avec les copolymères 14, 16, 19, 20, 24, 25 et 26.

Pour l'imprégnation, les conditions suivantes sont :
- Foulard horizontal de laboratoire Werner Mathis,
   - rouleaux : dureté du caoutchouc 70° Shore, largeur 350 mm, diamètre 110 mm,
   - pression entre les rouleaux : 100 % soit 40-45 kg/cm,
   - profondeur d'immersion dans le bain : 40 mm.
- Fixation thermique (vaporisage d'eau)
- Séchage en rame à 50°C,
- Imprégnation directe selon laquelle la solution copolymère est placée entre les rouleaux du foulard,
- Un ou deux passages dans le foulard.

Les différents essais sont comparés en fonction :
- du taux de l'emport,
- de la qualité du toucher, avec la légende suivante: -- signifie un toucher très mauvais (effet *"carton"* prononcé), - signifie un toucher mauvais (textile rigide), + signifie un toucher moyen et ++ signifie un toucher agréable (pratiquement identique à celui du textile non traité).

Les résultats sont rassemblés dans le tableau 3.

**TABLEAU 3**

| **TYPE DE TEXTILE** | **SOLUTION COPOLYMERE N°** | **NOMBRE PASSAGES FOULARD** | **TAUX D'EMPORT A SEC (%)** | **QUAUTE DU TOUCHER** |
|---|---|---|---|---|
| Tissu en coton | 14 | 1 | 11 | - |
| | | 2 | 11 | - |
| | 19 | 1 | 9,7 | + |
| | | 2 | 8,8 | + |
| | 16 | 1 | 7,6 | + |
| | | 2 | 6,9 | + |
| | 24 | 1 | 12,4 | - |
| | 27 | 1 | 10,8 | + |
| | 26 | 1 | 12,2 | + |
| | 25 | 1 | 10,4 | + |
| | 20 | 1 | 10,7 | - |
| Non-tissé | 14 | 1 | 17,5 | -- |
| | | 2 | 19,4 | *-* |
| | 19 | 1 | 15 | + |
| | | 2 | 16,7 | + |
| | 16 | 1 | 55,6 | + |
| | | 2 | 12,8 | + |
| | 24 | 1 | 20 | - |
| | 27 | 1 | 14,2 | + |
| | 26 | 1 | 19,5 | + |
| | 25 | 1 | 1,3 | + |
| | 20 | 1 | 17,8 | - |

En ce qui concerne le taux d'emport, c'est-à-dire la quantité de polymère fixée sur le support, les résultats sont relativement proches quelles que soient les solutions utilisées (avec ou sans acide acrylique).

Les résultats de l'application textile sont tout à fait acceptables.

On note que des essais effectués sur un tissu en coton et sur un non-tissé avec l'ensemble des solutions copolymères précitées ont donné des résultats similaires en terme de qualité au toucher.

### EXEMPLE 4 : Pouvoir bactéricide d'un textile imprégné

### 1/Principe

Le principe de ce test décrit dans le document FR-A-2 695 800, est rappelé ci-après.

Des échantillons de taille identique (disques de 34 mm de diamètre) de chacun des supports sont introduits dans des flacons stériles (diamètre sensiblement identique au disque) de manière à recouvrir totalement la surface inférieure.

Une suspension de *Pseudomonas aeruginosa ATCC* 9027 est préparée (0,4 ml dans du milieu nutritif) et introduite dans une étuve à 30°C pendant quelques heures.

Pour chaque type de textile testé, on prépare :
- un échantillon de chaque essai,
- deux échantillons témoins (avant imprégnation) : Un pour déterminer le nombre de bactéries au départ ("Témoin 0"), l'autre pour connaître le nombre de bactéries qui se développent après 24 heures ("Témoin 24").

Les échantillons sont inoculés avec :
- 0,2 ml de suspension bactérienne pour les échantillons de non-tissé à 70 g/m²,
- 0,6 ml de suspension bactérienne pour les échantillons de tissu de coton.

Un premier comptage de bactéries est effectué sur les "Témoins O". Les autres flacons ("Témoins 24" + différents essais) sont introduits dans l'étuve à 30°C et après 24 heures, on détermine le nombre de bactéries présentes dans le milieu.

Le comptage des bactéries est effectué par la méthode de l'exemple 2, paragraphe 2.

### 2/ Résultats

Les tests bactériologiques ont été effectués sur les échantillons de tissus en coton (uniquement les tissus après fixation) et de non-tissés en polyester imprégnés avec les solutions copolymère 14, 16, 19, 25, 26 et 27.

Les résultats sont rassemblés dans le tableau 3 suivant.

**TABLEAU 4**

| **TEXTILE** | **SOLUTION COPOLYMERE N°** | **NOR (mol/l)** | **TAUX D'EMPORT (%)** | **TEMPS (Heure)** | **TEMOIN** | **IMPREGNE** |
|---|---|---|---|---|---|---|
| Tissu coton | 14 | 0,1 | 11,0 | 0 | 2,5x10⁴ | ND |
| | | | | 24 | 2,5x10⁷ | 3x10¹ |
| | 19 | 0,17 | 9,7 | 0 | 4,5x10³ | ND |
| | | | | 24 | > 1x10⁸ | 2,5x10¹ |
| | 16 | 0,20 | 7,6 | 0 | 4,5x10³ | ND |
| | | | | 24 | > 1x10⁸ | 4,5x10¹ |
| | 25 | - | 10,4 | 0 | 0,7x10⁴ | ND |
| | | | | 24 | > 1x10⁹ | 2,5x10¹ |
| | 26 | - | 12,2 | 0 | 0,7x10⁴ | ND |
| | | | | 24 | > 1x10⁹ | 2,5x10¹ |
| | 27 | - | 10,8 | 0 | 0,7x10⁴ | ND |
| | | | | 24 | > 1x10⁹ | 2,5x10¹ |
| Non-Tissé | 14 | 0,1 | 17,5 | 0 | 2,5x10⁴ | ND |
| | | | | 24 | 4,5x10⁶ | 1,5x10² |
| | 19 | 0,17 | 15 | 0 | 2,5x10³ | ND |
| | | | | 24 | 4,5x10⁵ | 2,5x10¹ |
| | 16 | 0,20 | 55,6 | 0 | 2,5x10³ | ND |
| | | | | 24 | 4,5x10⁵ | 4,5x10¹ |
| | 25 | - | 1,3 | 0 | 1,5x10² | ND |
| | | | | 24 | 9,5x10⁷ | 2,5x10¹ |
| | 26 | - | 19,5 | 0 | 1,5x10² | ND |
| | | | | 24 | 9,5x10⁷ | 1,1x10¹ |
| | 27 | - | 14,2 | 0 | 1,5x10² | ND |
| | | | | 24 | 9,5x10⁷ | 2,5x10¹ |
| ND = Non Déterminé | | | | | | |

Les résultats obtenus sont excellents.

La quantité d'acide acrylique dans la solution n'a pas apparemment d'influence sur les résultats.

Le pouvoir antimicrobien des supports non-tissés en polyester est généralement un peu plus faible que celui des supports tissés en coton.

## Revendications

1. Copolymère d'acrylamide ou de dérivé d'acrylamide et de sels de trialkylammonium susceptible d'être obtenu par copolymérisation radicalaire en présence d'un amorceur
- d'au moins d'un premier monomère choisi parmi l'acrylamide et ses dérivés de formule
H₂C = CH ― (CH₂)_{n"} ― CONH₂
dans laquelle n" est un nombre entier pouvant varier de 1 à 5,
- et d'un second monomère choisi parmi les sels de trialkylammonium répondant à la formule (I) suivante
[H₂C = C(R₁) - (CH₂)ₙ - A - (CH₂)_{n'} - N⁺ (R₂) (R₃) (R₄)]X⁻ (I)
dans laquelle,
R₁ représente H ou un groupe alkyle ayant de 1 à 3 atomes de carbone,
R₂, R₃ et R₄ identiques ou différents, représentent chacun un groupe alkyle ayant de 1 à 3 atomes de carbone,
n et n' représentent chacun, indépendamment l'un de l'autre, un entier non nul au plus égal à 15,
A représente une fonction bivalente carboxyle ou amide, et
X⁻ représente un contre-ion.

2. Copolymère selon la revendication 1, **caractérisé en ce que** n varie de 7 à 9, n' varie de 2 à 4 et X⁻ représente Cl⁻, F⁻ ou un ion alkylsulfate.

3. Copolymère selon la revendication 2, **caractérisé en ce que** R₁ représente H ; R₂, R₃ et R₄ sont identiques et représentent chacun le groupe méthyle; n est égal à 8 et n' est égal à 3 ; A représente la fonction amide ; et X⁻ représente l'ion méthylsulfate.

4. Copolymère selon la revendication 2 ou 3, **caractérisé en ce que** le premier monomère est l'acrylamide.

5. Copolymère selon l'une des revendications 1 à 4, **caractérisé en ce qu'**il est susceptible d'être obtenu par copolymérisation radicalaire au moins dudit premier monomère, dudit second monomère et en outre d'un troisième monomère choisi parmi l'acide acrylique et les esters vinyliques.

6. Procédé d'obtention d'un copolymère selon la revendication 1, **caractérisé en ce qu'**il comprend les étapes consistant à mettre en réaction
- au moins un premier monomère choisi parmi l'acrylamide et ses dérivés de formule :
H₂C = CH ― (CH₂)_{n"} ― CONH₂
dans laquelle n" est un nombre entier pouvant varier de 1 à 5,
- et un second monomère choisi parmi les sels de trialkylammonium répondant à la formule (I) suivante :
[H₂C = C(R₁) - (CH₂)ₙ - A - (CH₂)_{n'} - N⁺ (R₂) (R₃) (R₄)] X⁻ (I)
dans laquelle,
R₁ représente H ou un groupe alkyle ayant de 1 à 3 atomes de carbone,
R₂, R₃ et R₄ identiques ou différents, représentent chacun un groupe alkyle ayant de 1 à 3 atomes de carbone,
- n et n' représentent chacun, indépendamment l'un de l'autre, un entier non nul au plus égal à 15,
A représente une fonction bivalente carboxyle ou amide, et
X⁻ représente un contre-ion.
dans un solvant à la température du reflux, en présence d'un amorceur.

7. Procédé selon la revendication 6, **caractérisé en ce que** le premier monomère est l'acrylamide et le second monomère répond à la formule (I) dans laquelle n varie de 7 à 9, n' varie de 2 à 4 et X⁻ représente Cl⁻, F⁻ ou un ion alkylsulfate.

8. Procédé selon la revendication 6 ou 7, **caractérisé en ce que** le second monomère répond à la formule (I) dans laquelle R₁ représente H ; R₂, R₃ et R₄ sont identiques et représentent chacun le groupe méthyle ; n est égal à 8 et n' est égal à 3 ; A représente la fonction amide ; et X⁻ représente l'ion méthylsulfate.

9. Procédé selon l'une des revendications 6 à 8, **caractérisé en ce que** la concentration molaire du second monomère est au moins égale à 20 % par rapport à la concentration molaire des premier et second monomères.

10. Procédé selon la revendication 9, **caractérisé en ce que** la concentration molaire du second monomère est au moins égale à 25 % et au plus égale à 40 % par rapport à la concentration molaire finale des premier et second monomères.

11. Procédé selon la revendication 6, **caractérisé en ce qu'**on met en outre en réaction un troisième monomère choisi parmi l'acide acrylique et les esters vinyliques.

12. Procédé selon la revendication 6, **caractérisé en ce que** le solvant est un mélange eau/méthanol, en un rapport molaire variant de 25/75 à 50/50.

13. Procédé selon la revendication 6, **caractérisé en ce que** l'amorceur est choisi parmi l'hydrochlorure de 2,2'-azobis(2-amidinopropane) et le persulfate de potassium.

14. Procédé selon la revendication 6 ou 11, **caractérisé en ce que** la mise en réaction des premier, second et éventuellement d'un troisième monomère est effectuée sous flux d'azote.

15. Textile enduit par un copolymère selon l'une quelconque des revendications 1 à 5.

16. Textile selon la revendication 15, **caractérisé en ce qu'**il est choisi parmi les tissus en coton et les non-tissés en polyester.

17. Utilisation d'un copolymère selon l'une quelconque des revendications 1 à 5, pour obtenir un support textile biocide par contact.

## Claims

1. Copolymer of acrylamide or of a derivative of acrylamide and of trialkylammonium salts obtainable by free-radical copolymerization in the presence of an initiator
- of at least one first monomer selected from acrylamide and its derivatives of formula
H₂C = CH - (CH₂)_{n"} - CONH₂
in which n" is a whole number which can vary from 1 to 5,
- and of a second monomer selected from the trialkylammonium salts complying with the following formula (I)
[H₂C = C(R₁) - (CH₂)ₙ - A - (CH₂)_{n'} - N⁺ (R₂) (R₃) (R₄)]X⁻ (I)
in which
R₁ represents H or an alkyl group having from 1 to 3 carbon atoms,
R₂, R₃ and R₄ are identical or different and each represents an alkyl group having from 1 to 3 carbon atoms,
n and n' are mutually independent, and each represents a non-zero integer at most equal to 15,
A represents a bivalent carboxy or amide function and
X⁻ represents a counterion.

2. Copolymer according to Claim 1, **characterized in that** n varies from 7 to 9, n' varies from 2 to 4 and X⁻ represents Cl⁻, F⁻ or an alkyl sulphate ion.

3. Copolymer according to Claim 2, **characterized in that** R₁ represents H; R₂, R₃ and R₄ are identical, and each represents the methyl group; n is equal to 8 and n' is equal to 3; A represents the amide function; and X⁻ represents the methyl sulphate ion.

4. Copolymer according to Claim 2 or 3, **characterized in that** the first monomer is acrylamide.

5. Copolymer according to any of Claims 1 to 4, **characterized in that** it is obtainable by free-radical copolymerization at least of the said first monomer, of the said second monomer, and also of a third monomer selected from acrylic acid and vinyl esters.

6. Process for obtaining a copolymer according to Claim 1, **characterized in that** it comprises the steps of reacting, in a solvent at reflux temperature in the presence of an initiator,
- at least one first monomer selected from acrylamide and its derivatives of formula:
H₂C = CH - (CH₂)_{n"} - CONH₂
in which n" is a whole number which can vary from 1 to 5,
- and a second monomer selected from the trialkylammonium salts complying with the following formula (I):
[H₂C = C(R₁) - (CH₂)ₙ - A - (CH₂)ₙ, - N⁺ (R₂) (R₃) (R₄)]X⁻ (I)
in which
R₁ represents H or an alkyl group having from 1 to 3 carbon atoms,
R₂, R₃ and R₄ are identical or different and each represents an alkyl group having from 1 to 3 carbon atoms,
n and n' are mutually independent, and each represents a non-zero integer at most equal to 15,
A represents a bivalent carboxy or amide function and
X⁻ represents a counterion.

7. Process according to Claim 6, **characterized in that** the first monomer is acrylamide and the second monomer complies with the formula (I) in which n varies from 7 to 9, n' varies from 2 to 4 and X⁻ represents Cl⁻, F⁻ or an alkyl sulphate ion.

8. Process according to Claim 6 or 7, **characterized in that** the second monomer complies with the formula (I) in which R₁ represents H; R₂, R₃ and R₄ are identical, and each represents the methyl group; n is equal to 8 and n' is equal to 3; A represents the amide function; and X⁻ represents the methyl sulphate ion.

9. Process according to any of Claims 6 to 8, **characterized in that** the molar concentration of the second monomer is at least equal to 20%, based on the molar concentration of the first and second monomers.

10. Process according to Claim 9, **characterized in that** the molar concentration of the second monomer is at least equal to 25% and at most equal to 40%, based on the final molar concentration of the first and second monomers.

11. Process according to Claim 6, **characterized in that** a third monomer selected from acrylic acid and vinyl esters is also reacted.

12. Process according to Claim 6, **characterized in that** the solvent is a water/methanol mixture in a molar ratio varying from 25/75 to 50/50.

13. Process according to Claim 6, **characterized in that** the initiator is selected from 2,2'-azobis-(2-amidinopropane) hydrochloride and potassium persulphate.

14. Process according to Claim 6 or 11, **characterized in that** the first, second, and optionally a third monomer are reacted under a stream of nitrogen.

15. Textile coated with a copolymer according to any one of Claims 1 to 5.

16. Textile according to Claim 15, **characterized in that** it is selected from cotton fabrics and polyester non-wovens.

17. Use of a copolymer according to any one of Claims 1 to 5 for obtaining a contact-biocidal textile support.

## Patentansprüche

1. Copolymer aus Acrylamid oder einem Acrylamidderivat und Trialkylammoniumsalzen, das in Gegenwart eines Starters durch radikalische Copolymerisation
- mindestens eines ersten Monomers, das unter Acrylamid und seinen Derivaten der folgenden Formel ausgewählt ist:
H₂C=CH-(CH₂)_{n"}-CONH₂,
in der n" eine ganze Zahl bedeutet, die im Bereich von 1 bis 5 liegen kann, und
- eines zweiten Monomers hergestellt werden kann, das unter den Trialkylammoniumsalzen der folgenden Formel (I) ausgewählt ist:
[H₂C=C(R₁)-(CH₂)ₙ-A-(CH₂)_{n'}-N⁺(R₂)(R₃)(R₄)]X⁻ (I)
worin bedeuten:
- R₁ H oder eine Alkylgruppe mit 1 bis 3 Kohlenstoffatomen,
- die Gruppen R₂, R₃ und R₄, die gleich oder verschieden sind, jeweils eine Alkylgruppe mit 1 bis 3 Kohlenstoffatomen,
- n und n' jeweils unabhängig voneinander eine ganze Zahl, die nicht 0 und höchstens 15 bedeutet,
- A eine zweiwertige Carboxy- oder Amidgruppe, und
- X⁻ ein Gegenion.

2. Copolymer nach Anspruch 1, **dadurch gekennzeichnet, dass** n im Bereich von 7 bis 9 und n' im Bereich von 2 bis 4 liegt, und X⁻ Cl⁻, F⁻ oder ein Alkylsulfation bedeutet.

3. Copolymer nach Anspruch 2, **dadurch gekennzeichnet, dass** R₁ H bedeutet; die Gruppen R₂, R₃ und R₄ identisch sind und jeweils Methyl bedeuten; n 8 und n' 3 ist; A die Amidfunktion bedeutet; und X⁻ das Methylsulfation ist.

4. Copolymer nach Anspruch 2 oder 3, **dadurch gekennzeichnet, dass** das erste Monomer das Acrylamid ist.

5. Copolymer nach einem der Ansprüche 1 bis 4, **dadurch gekennzeichnet, dass** es durch radikalische Copolymerisation zumindest des ersten Monomers, des zweiten Monomers und außerdem eines dritten Monomers erhältlich ist, das unter Acrylsäure und den Vinylestern ausgewählt ist.

6. Verfahren zur Herstellung eines Copolymers nach Anspruch 1, **dadurch gekennzeichnet, dass** es Schritte umfasst, die darin bestehen,
- zumindest ein erstes Monomer, das unter Acrylamid und seinen Derivaten der folgenden Formel ausgewählt ist:
H₂C=CH-(CH₂)_{n"}-CONH₂,
worin n" eine ganze Zahl bedeutet, die im Bereich von 1 bis 5 liegen kann,
- und ein zweites Monomers, das unter den Trialkylammoniumsalzen der folgenden Formel (I) ausgewählt ist:
[H₂C=C(R₁)-(CH₂)ₙ-A-(CH₂)_{n'}-N⁺(R₂)(R₃)(R₄)]X⁻ (I)
worin bedeuten:
- R₁ H oder eine Alkylgruppe mit 1 bis 3 Kohlenstoffatomen,
- die Gruppen R₂, R₃ und R₄, die gleich oder verschieden sind, jeweils eine Alkylgruppe mit 1 bis 3 Kohlenstoffatomen,
- n und n' jeweils unabhängig voneinander eine ganze Zahl, die nicht 0 und höchstens 15 bedeutet,
- A eine zweiwertige Carboxy- oder Amidgruppe, und
- X⁻ ein Gegenion,
in einem Lösungsmittel bei Rückflusstemperatur in Gegenwart eines Starters umzusetzen.

7. Verfahren nach Anspruch 6, **dadurch gekennzeichnet, dass** das erste Monomer das Acrylamid ist und das zweite Monomer der Formel (I) entspricht, in der n im Bereich von 7 bis 9 liegt, n' im Bereich von 2 bis 4 liegt und X⁻ Cl⁻, F⁻ oder ein Alkylsulfation bedeutet.

8. Verfahren nach Anspruch 6 oder 7, **dadurch gekennzeichnet, dass** das zweite Monomer der Formel (I) entspricht, worin R₁ H bedeutet; die Gruppen R₂, R₃ und R₄ identisch sind und jeweils Methyl bedeuten; n 8 und n' 3 ist; A die Amidfunktion bedeutet; und X⁻ das Methylsulfation ist.

9. Verfahren nach einem der Ansprüche 6 bis 8, **dadurch gekennzeichnet, dass** die molare Konzentration des zweiten Monomers mindestens 20 %, bezogen auf die molare Konzentration des ersten und des zweiten Monomers beträgt.

10. Verfahren nach Anspruch 9, **dadurch gekennzeichnet, dass** die molare Konzentration des zweiten Monomers mindestens 25 % und höchstens 40 %, bezogen auf die molare Endkonzentration des ersten und des zweiten Monomers, beträgt.

11. Verfahren nach Anspruch 6, **dadurch gekennzeichnet, dass** außerdem ein drittes Monomer umgesetzt wird, das unter Acrylsäure und den Vinylestern ausgewählt ist.

12. Verfahren nach Anspruch 6, **dadurch gekennzeichnet, dass** das Lösungsmittel ein Gemisch von Wasser und Methanol in einem Molverhältnis von 25/75 bis 50/50 ist.

13. Verfahren nach Anspruch 6, **dadurch gekennzeichnet, dass** der Starter unter 2,2'-Azobis(2-amidinopropan)-Hydrochlorid und Kaliumpersulfat ausgewählt ist.

14. Verfahren nach Anspruch 6 oder 11, **dadurch gekennzeichnet, dass** die Umsetzung des ersten Monomers, des zweiten Monomers und ggf. eines dritten Monomers unter Stickstoffstrom durchgeführt wird.

15. Ein mit einem Copolymer nach einem der Ansprüche 1 bis 5 beschichtetes Gewebe.

16. Gewebe nach Anspruch 15, **dadurch gekennzeichnet, dass** es unter den Baumwollgeweben und den Vliesstoffen aus Polyester ausgewählt ist.

17. Verwendung eines Copolymers nach einem der Ansprüche 1 bis 5 zur Herstellung eines textilen Trägers, der durch Kontakt biozid wirkt.
